# EUROPÄISCHE PATENTSCHRIFT

(11) **EP 3 701 167 B1**
(45) Veröffentlichungstag und Bekanntmachung des Hinweises auf die Patenterteilung: **05.07.2023**
(21) Anmeldenummer: 18742749.7
(22) Anmeldetag: 14.08.2018
(51) Int. Cl.: F16G 1/10, F16G 1/28, F16G 5/08, F16G 5/20

(54) **ARTIKEL MIT MEHRFACH ABWECHSELND PLATTIERTER TEXTILAUFLAGE**
ARTICLE HAVING A MULTIPLY ALTERNATELY PLATED TEXTILE OVERLAY
ARTICLE À COUCHE TEXTILE VANISÉE EN ALTERNANCE DE MANIÈRE RÉPÉTÉE

(30) Priorität: 27.10.2017 DE 102017219339
(43) Veröffentlichungstag der Anmeldung: 02.09.2020
(73) Patentinhaber: ContiTech Antriebssysteme GmbH, 30165 Hannover (DE)
(72) Erfinder: KANZOW, Henning, 30419 Hannover (DE); BROIANIGO, Felicitas, 30419 Hannover (DE); GASKA, Roman, 31319 Sehnde (DE)
(74) Vertreter: Continental Corporation
(86) Internationale Anmeldenummer: PCT/EP2018/068904
(87) Internationale Veröffentlichungsnummer: WO 2019/081078

(56) Entgegenhaltungen:
- EP-A1- 2 980 446
- WO-A1-2009/030529
- DE-A1-102012 105 510

## Beschreibung

Die vorliegende Erfindung betrifft einen Artikel mit einem elastischen Grundkörper auf der Basis wenigstens eines thermoplastischen Elastomers oder auf der Basis eines Vulkanisates mit einer Artikeloberfläche, die mit einer Textilauflage versehen ist, welche eine plattierte Maschenware ist, dadurch gekennzeichnet, dass die Textilauflage aus mindestens zwei Garntypen besteht, die sich in regelmäßen Abständen in den einzelnen Maschenreihen abwechseln.

Ein Artikel, der dynamischen Belastungen und somit einem Verschleiß wie auch Geräuschentwicklungen ausgesetzt ist, ist beispielsweise ein Band, Gurt, Riemen, Schlauch, Luftfederbalg, Kompensator oder eine mehrschichtige Stoffbahn, wobei der Riemen in Form eines Antriebsriemens und hier speziell der Keilrippenriemen von besonderer Bedeutung ist. Der Grundkörper des Antriebsriemens umfasst dabei eine Decklage als Riemenrücken und einen Unterbau mit einer Kraftübertragungszone. Diesbezüglich wird insbesondere auf die Patentanmeldungen DE 38 23 157 A1, DE 10 2006 007 509 A1, WO 2005/080821 A1, WO 2006/066669 A1 sowie auf die Patente US 3,981,206 und US 5,417,618 verwiesen. Die Elastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere (TPE) zu nennen sind. Der elastische Grundkörper ist ferner zumeist noch mit einem eingebetteten Festigkeitsträger bzw. Zugträger versehen, der ein- oder mehrlagig ausgeführt sein kann. Des Weiteren ist auch ein Artikel mit einem elastischen Grundkörper aus der DE 10 2012 105510 A1 bekannt.

Antriebsriemen als schwerpunktmäßiger Einsatzbereich werden zur Geräuschreduzierung wie auch zur Erhöhung der Abriebsbeständigkeit insbesondere im Bereich der Kraftübertragungszone mit einer Beschichtung versehen. Üblicherweise werden zur Beschichtung Textilauflagen verwendet. Vor allem Textilauflagen in Form eines Gewebes oder in Form von Maschenware (d.h. in Form eines Gestrickes oder Gewirkes) sind im Stand der Technik bekannt (vgl. beispielsweise WO 2011/1103272 A1, DE 10 2007 062 285 A1, DE 10 2006 007 509 A1 und US 4,027,545).

Bei reibschlüssigen Antriebsriemen, wie z.B. Keilrippenriemen, besteht immer die Gefahr von Geräuschen bei Wasserzugabe, da sich die Reibverhältnisse (Reibbeiwerte) bei Trockenheit und bei Nässe unterscheiden. Auf der anderen Seite ist bekannt, dass man oft gerade mit Textilbeschichtungen das Geräuschverhalten nass und trocken deutlich verbessern kann. Bei Textilauflagen in Form von Maschenware besteht allerdings zusätzlich die Gefahr von zu viel Mischungsdurchtritt durch die Maschen, was ebenfalls zu einem schlechten Geräuschverhalten insbesondere trocken bei Scheibenschiefstellungen führen kann. Weiterhin können Textilauflagen verschleißen und so die Riemen ihre guten Geräuscheigenschaften verlieren. In der Praxis zeigt sich, dass man die Textilauflage für die jeweilige Anwendung (Riementrieb/Motor) optimieren muss, um optimale Reibverhältnisse (Reibbeiwerte) nass und trocken zu erhalten, um wiederum unerwünschte Geräusche zu unterdrücken. Dabei muss gleichzeitig darauf geachtet werden, dass die Textilauflage eine ausreichende Verschleißbeständigkeit aufweist. Bei Keilrippenriemen werden häufig Textilbeschichtungen in Form von Gestricken aus Baumwolle oder Polyamid verwendet. Dabei zeigen die Riemen mit Baumwollbeschichtungen häufig ein gutes Geräuschverhalten bei Nässe aber eine relativ schlechte Abriebbeständigkeit. Riemen mit Polyamidgestricken kombinieren oft ein gutes Geräuschverhalten bei Trockenheit und ein gutes Verschleißverhalten, weisen aber bei manchen Anwendungen ein schlechtes Geräuschverhalten bei Nässe auf. Gestricke aus Baumwolle zeigen meist eine bessere Haftung als Gestricke aus Polyamid.

In der Patentanmeldung DE 10 2012 105 510 A1 wurde zur Lösung der vorstehend genannten Probleme ein Artikel, insbesondere ein Antriebsriemen, mit einer Textilauflage in Form einer plattierten Maschenware vorgeschlagen.

Plattierte Maschenware bedeutet, dass die Maschen aus wenigstens zwei Fäden auf eine solche Art gebildet werden, dass ein Faden auf der rechten Warenseite liegt (Plattierfaden, auch Deckfaden genannt), während der zweite Faden auf der linken Seite liegt (plattierter Faden). Nach der Patentanmeldung DE 10 2012 105 510 A1 ist es auf diese Weise möglich, die Eigenschaften des mit der Textilauflage versehenen Artikels zur Artikelinnenseite und gleichzeitig zur Artikelaußenseite zu steuern. Zur Artikelinnenseite lässt sich somit beispielsweise die Haftung zum Vulkanisat optimieren, während gleichzeitig zur Artikelaußenseite ein optimiertes Geräuschverhalten bei guter Verschleißfestigkeit eingestellt werden kann.

Bei dieser Anordnung ist auf jeder Warenseite der Maschenware jeweils nur hauptsächlich ein Garntyp angeordnet. So erhält man beispielsweise bei der Verwendung von einem Polyamidgarn für die Artikelaußenseite zwar einen relativ geringen Reibungskoeffizienten und ein gutes Geräuschverhalten bei Trockenheit. Bei Nässe hingegen ist das Geräuschverhalten unter Umständen nicht zufriedenstellend. Umgekehrt erhält man bei der Verwendung von einem Baumwollgarn für die Artikelaußenseite zwar einen relativ hohen Reibungskoeffizienten und ein gutes Geräuschverhalten bei Nässe. Hier ist jedoch das Geräuschverhalten bei Trockenheit, insbesondere beispielsweise bei Scheibenschiefstellung, manchmal nicht zufriedenstellend.

Der vorliegenden Erfindung liegt somit die Aufgabe zugrunde, einen Artikel mit einer Textilauflage bereitzustellen, wobei sich die Textilauflage durch eine gute Haftung zur Artikeloberfläche bei gleichzeitig günstigem Geräuschverhalten bei Nässe und Trockenheit und optimiertem und einstellbaren Reibungskoeffizienten und gute Abriebbeständigkeit auszeichnet.

Diese Aufgabe wird durch die in den Ansprüchen gekennzeichneten Ausführungsformen gelöst.

Insbesondere wird erfindungsgemäß ein Artikel mit einem elastischen Grundkörper auf der Basis wenigstens eines thermoplastischen Elastomers oder auf der Basis eines Vulkanisates mit einer Artikeloberfläche bereitgestellt, wobei die Artikeloberfläche mit einer Textilauflage versehen ist, welche eine plattierte Maschenware ist, dadurch gekennzeichnet, dass die Textilauflage aus mindestens zwei Garntypen besteht, die sich in regelmäßen Abständen in den einzelnen Maschenreihen abwechseln.

Die in dem erfindungsgemäßen Artikel enthaltene Maschenware ist somit mehrfach abwechselnd plattiert. Dies bedeutet, dass sich die Garntypen von Maschenreihe zu Maschenreihe abwechseln.

Im Unterschied zu einer beispielsweise aus DE 10 2012 105 510 A1 bekannten normal plattierten Textilauflage, bei dem auf der Außenseite der Textilauflage hauptsächlich ein Garntyp zu finden ist, wo dieser die Reibungs- und Geräuscheigenschaften der Textilauflage dominiert, und der andere Garntyp hauptsächlich die zur Unterbaumischung innenliegende Seite des Textils dominiert, sind erfindungsgemäß beide Garntypen in fest definierten Anteilen auf beiden Seiten zu finden.

Die Textilauflage des erfindungsgemäßen Artikels ist also so konstruiert, dass sich beide Garntypen in definierten Abständen mal auf der einen, mal auf der anderen Seite der Textilauflage befinden. Auf diese Weise ist es überraschenderweise möglich, einen Artikel mit Textilauflage bereitzustellen, wobei die Haftung zur Artikeloberfläche, die Reibungseigenschaften sowie die Geräuscheigenschaften bei Nässe und bei Trockenheit optimal eingestellt werden können. Weiterhin wurde überraschend gefunden, dass diese Textilbeschichtungen gleichzeitig eine sehr gute Abriebbeständigkeit aufweisen kann. Damit wird eine optimierte Einstellung der relevanten Eigenschaften in Abhängigkeit von der konkreten Anwendung ermöglicht.

Gemäß der vorliegenden Erfindung ist es bevorzugt, dass sich das Garn vom ersten Typ beispielsweise in jeder zweiten, dritten, vierten oder fünften Maschenreihe an der Innenseite der Textilauflage befindet, während sich bei den anderen Maschenreihen das Garn vom zweiten Typ an der Innenseite der Textilauflage befindet. In anderen Worten ist es bevorzugt, dass jede zweite, dritte, vierte oder fünfte Maschenreihe aus Garn vom ersten Typ besteht und sich auf der Seite von der Textilauflage befindet, die mit dem elastischen Grundkörper in Kontakt steht.

In einer anderen bevorzugten Ausführungsform befindet sich das Garn vom ersten Typ beispielsweise in jeder zweiten, dritten, vierten oder fünften Maschenreihe an der Außenseite der Textilauflage, während sich bei den anderen Maschenreihen das Garn vom zweiten Typ an der Außenseite befindet.

Die beiden Garntypen können jedwede geeignete Garntypen sein. Geeignete Garne bzw. Fäden können beispielsweise aus Naturfasern oder aus Chemiefasern bestehen. Beispiele für geeignete Natur- und Chemiefasern sind Fasern aus Cellulose (insbesondere Baumwolle (CO) und Viskose (CV)), Sisal, Hanf, Leinen, Seide, Kaschmir, Rosshaar, Aramid (AR), Polyurethan (PU), Polybenzimidazol (PBI), Melamin (MEL), Polybenzoxazol (PBO), Kohlenstoff, Polyamid (PA) (insbesondere PA 6.6, PA 12, PA 6), Polycarbonat (PC), Polyethylen (PE) (insbesondere UHMWPE), Polypropylen (PP), Polystyrol (PS), Polyacryl (PAN), Acetat (CA), Triacetat (CTA), Polyvinylalkohol (PVA), Polyamidimid (PAI), Polytrimethylenterephthalat (PTT), Polyimid (PI), Polybutylenterephthalat (PBT)), Polytetrafluorethylen (PTFE), Polyphenylensulfid (PPS), Polyetheretherketon (PEEK), Polyester (PES) (insbesondere Polyethylenterephthalat (PET)) und Kombinationen davon.

Gemäß einer bevorzugten Ausführungsform der vorliegenden Erfindung besteht der eine Garntyp aus Cellulosefasern und der andere Garntyp besteht aus Thermoplastfasern. Beispiele für geeignete Thermoplaste sind Polyamid (PA) (insbesondere PA 6.6, PA 12, PA 6), Polycarbonat (PC), Polyethylen (PE) (insbesondere UHMWPE), Polypropylen (PP), Polystyrol (PS), Polyacryl (PAN), Acetat (CA), Triacetat (CTA), Polyvinylalkohol (PVA), Polyamidimid (PAI), Polytrimethylenterephthalat (PTT), Polyimid (PI), Polybutylenterephthalat (PBT)), Polytetrafluorethylen (PTFE), Polyphenylensulfid (PPS), Polyetheretherketon (PEEK), Polyester (PES) (insbesondere Polyethylenterephthalat (PET)) und Kombinationen davon. In einer besonders bevorzugten Ausführungsform der vorliegenden Erfindung besteht das Garn vom Typ Cellulosefasern aus Baumwolle oder Viskose. Der bevorzugte Thermoplast ist PA6.6, PA6 oder PET.

Gemäß einer weiteren bevorzugten Ausführungsform besteht jede zweite, dritte, vierte oder fünfte Maschenreihe aus Garn vom Typ Cellulosefasern und befindet sich auf der Seite von der Textilauflage, die mit dem elastischen Grundkörper in Kontakt steht. Gemäß einer anderen bevorzugten Ausführungsform besteht jede zweite, dritte, vierte oder fünfte Maschenreihe aus Garn vom Typ Thermoplastfasern und befindet sich auf der Seite von der Textilauflage, die mit dem elastischen Grundkörper in Kontakt steht.

Die beiden Garntypen können jedwede geeignete Dicke aufweisen. Gemäß einer bevorzugten Ausführungsform weisen die beiden Garntypen eine unterschiedliche Dicke auf. Auf diese Weise ist es möglich, die Oberfläche der Maschenware gezielt zu verändern, was vorteilhaft hinsichtlich der Geräuschdämmng sowie der Leistungsübertragung ist, insbesondere bei Nässe.

Zusätzlich kann gegebenenfalls wenigstens ein weiterer zusätzlicher Faden zur Stabilisierung der Maschenware im Verarbeitungsprozess vorhanden sein. Gemäß einer bevorzugten Ausführungsform umfasst die Textilauflage somit mindestens einen dritten Faden zur Stabilisierung der Textilauflage. Als zusätzlicher dritter Faden kann beispielsweise ein Polyurethanfaden eingesetzt werden. Der Vorteil der Verwendung eines zusätzlichen Polyurethanfadens liegt darin, dass dadurch eine hohe Dehnbarkeit in Querrichtung erreicht werden kann, welche bei dem Einsatz des Textils auf der Laufseite von Keilrippenriemen erforderlich ist, da man sonst die Rippen nicht ausformen kann. Außerdem mit einer solchen Anordnung auch eine gewisse Längsdehnung erreicht, da das Textil beim Umlauf des Riemens um Rückenrollen gedehnt wird.

Der erfindungsgemäße Artikel weist einen elastischen Grundkörper auf der Basis wenigstens eines thermoplastischen Elastomers oder auf der Basis eines Vulkanisates auf. Unter einem Elastomer werden formfeste, aber elastisch verformbare Kunststoffe verstanden, deren Glasübergangspunkt sich unterhalb der Raum- bzw. Einsatztemperatur befindet. Das Vulkanisat liegt vorzugsweise in Form einer vulkanisierten Kautschukmischung, enthaltend wenigstens eine Kautschukkomponente und Mischungsingredienzien, vor. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), FluorKautschuk (FKM), Naturkautschuk (NR), Styrol-Butadien-Kautschuk (SBR) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder ein EPM/EPDM-Verschnitt. Die Mischungsingredienzien umfassen dabei wenigstens einen Vernetzer oder ein Vernetzersystem (Vernetzungsmittel und Beschleuniger). Wegen der besseren Wärmealterungsbeständigkeit werden bevorzugt Peroxide als Vernetzer eingesetzt. Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

Gemäß einer bevorzugten Ausführungsform der vorliegenden Erfindung ist die plattierte Maschenware ein Gestrick oder eine Kettwirkware, wobei vorteilhafterweise ein Gestrick verwendet wird. Nach einer Variante der Erfindung ist das Gestrick als Rechts-Rechts-Gestrick, Links-Links-Gestrick, besonders bevorzugt als Rechts-Links-Gestrick ausgeführt.

Die mehrfach plattierte Maschenware kann einlagig oder mehrlagig ausgebildet sein. Es kann die Oberseite und / oder die Unterseite des Artikels mit der plattierten Maschenware beschichtet sein. Handelt es sich bei dem Artikel um einen Antriebsriemen, insbesondere einen Keilrippenriemen, so ist vorzugsweise die Rippenseite mit der plattierten Maschenware beschichtet. Es ist aber auch möglich, dass zusätzlich die Decklage mit der plattierten Maschenware beschichtet ist. Je nach Dicke der übereinander plattierten Fäden ist es nach der Ausformung des Antriebsriemens möglich, dass an der Oberfläche auch Teile des unten liegenden Fadens sichtbar sind, so dass beide Fäden in unterschiedlichem Maße die Oberflächeneigenschaften beeinflussen können. Dies macht eine weitere individuelle Einstellung der Riemeneigenschaften möglich. Der Einsatz einer wendeplattierten Maschenware ist ebenso denkbar.

Ein etwaiger Vulkanisatdurchtritt kann durch die Zahl der Maschenreihen variabel beeinflusst werden. Dies geschieht z.T. auch in Abhängigkeit vom Fadendurchmesser. Bevorzugt beträgt die Maschenreihenzahl zwischen 15 und 35, besonders bevorzugt zwischen 25 und 35. Abweichungen nach oben und unten sind hierbei abhängig vom Fadendurchmesser denkbar.

Die Maschenware kann zusätzlich auf der der Artikelseite zugewandten Seite mit einem Haftmittel versehen sein. Auch kann es mit einer Polymerlösung getränkt sein, insbesondere unter dem Aspekt der Veränderung des CoF-Wertes. Vorteilhaft ist hier auch die Verwendung einer Polymerschicht, insbesondere einer Polymerfolie, wobei diese bevorzugt auf Basis von Polyethylen ist.

Das Haftmittel und/oder die Polymerlösung kann zudem noch ein Trockenschmiermittel enthalten, und zwar bei der Polymerlösung insbesondere zur Senkung des Reibbeiwertes. Das Trockenschmiermittel ist vorzugsweise ein Fluorkunststoff, wie beispielsweise Polytetrafluorethylen (PTFE) und / oder Polyvinylfluorid (PVF) und / oder Polyvinylidenfluorid (PVDF), wobei insbesondere Polytetrafluorethylen (PTFE) zu nennen ist.

Das Haftmittel und/oder die Polymerlösung kann/können ferner elektrisch leitfähig ausgeführt sein, insbesondere auf der Basis von Ruß und/oder Graphit und/oder eines Metallzusatzes. Von besonderer Bedeutung ist dabei der Einsatz eines elektrisch leitfähigen Rußes.

Die nach außen weisende Oberfläche der plattierten Maschenware kann noch mit einer zusätzlichen Beschichtung versehen sein. Bevorzugt ist sie allerdings frei von einer zusätzlichen Beschichtung.

Der erfindungsgemäße Artikel liegt vorzugsweise in der Form eines Bandes, Gurtes, Riemens, Schlauches, Luftfederbalges (insbesondere Axialbalges oder Kreuzlagenbalges), Kompensators oder einer mehrschichtigen Stoffbahn vor. Vorzugsweise liegt der Artikel in der Form eines Antriebesriemes vor. Dabei umfasst der elastische Grundkörper eine Decklage als Riemenrücken und einen Unterbau mit einer Kraftübertragungszone, wobei die Decklage und/oder die Kraftübertragungszone mit der Textilauflage versehen ist/sind. Besonders bevorzugt ist der Antriebsriemen als Flachriemen, Keilriemen, Keilrippenriemen, Zahnriemen, Kupplungsriemen oder Aufzugsriemen ausgebildet.

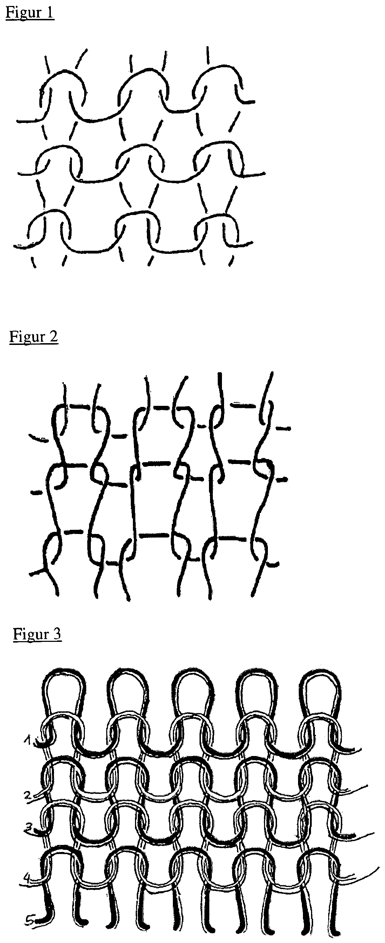

Figuren 1 und 2 zeigen jeweils eine Textilauflage in Form eines Rechts-Links-Gestrickes gemäß dem Stand der Technik (DE 10 2012 105 510 A1).
Figur 1 zeigt hierbei die linke Seite des Gestrickes und Figur 2 die rechte Seite des Gestrickes. Bei dieser Textilauflage besteht jede Seite der Textilauflage aus hauptsächlich einem einzigen Garntyp.
Figuren 3 bis 5 zeigen jeweils eine Textilauflage in Form eines Rechts-Links-Gestrickes für einen erfindungsgemäßen Artikel.

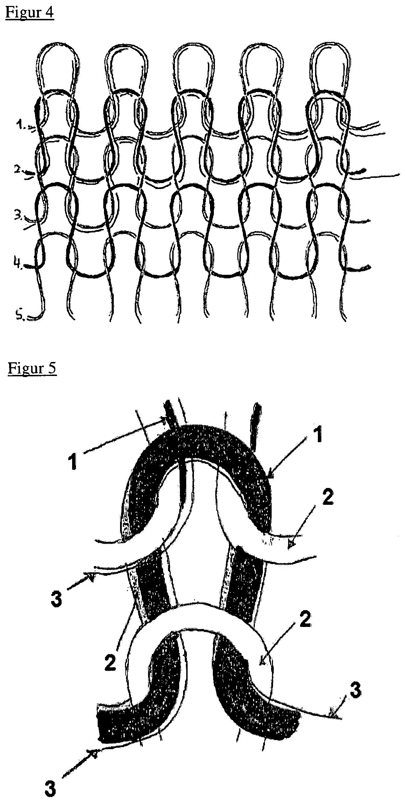

Figur 3 zeigt die linke Warenseite des Gestrickes wobei die Maschenreihen 1, 3 und 5 aus einem Baumwollgarn bestehen, während die Maschenreihen 2 und 4 aus einem Polyamid 6.6 Garn bestehen. Darüber hinaus ist noch ein dünnes Elastangarn (ein Polyurethanfaden) als drittes Garn parallel zu den beiden Garntypen in jeder der Maschenreihe 1 bis 5 dargestellt. Figur 4 zeigt die rechte Warenseite desselben Gestrickes. Hier bestehend die Maschenreihen 2 und 4 aus dem Baumwollgarn, während die Maschenreihen 1, 3 und 5 aus dem Polyamid 6.6 Garn bestehen. Auch hier ist ein zusätzliches Elastangarn in jeder der Maschenreihen 1 bis 5 vorhanden.

Die Figuren 3 und 4 zeigen eine mehrfach plattierte Maschenware gemäß der vorliegenden Erfindung, bei der die beiden Garntypen abwechseln auf der Ober- und Unterseite der Ware angeordnet sind. Dies ermöglicht eine genaue Einstellung der gewünschten Eigenschaften des erfindungsgemäßen Artikels, insbesondere um eine vorteilhafte Kombination aus dauerhaftem Verschleißschutz und Geräuschdämmung, vor allem bei Nässe, zu erzielen.

Die Figur 5 zeigt einen Ausschnitt aus der Maschenware für einen erfindungsgemäßen Artikel, wobei das Bezugszeichen 1 das Baumwollgarn kennzeichnet, das Bezugszeichen 2 das Polyamid 6.6 Garn kennzeichnet und das Bezugszeichen 3 das Elastangarn kennzeichnet.

Die Erfindung wird nunmehr anhand von Beispielen näher erläutert.

### Beispiele:

### Beispiel 1 und Vergleichsbeispiele 1 bis 4:

Riemen mit verschiedenen Flock- und Textilauflagen wurden auf einem Common Rail-Motor mit einem 4-Scheiben-Keilrippenriemen-Trieb mit und ohne Wasserzugabe auf Geräusche getestet.

Der Reibbeiwert wurde dabei nach SAE J2432, Ausgabe 2015, gemessen.

Die Nassgeräusche wurden bewertet, indem der Motor eines Autos im Leerlauf betrieben, der Riementrieb mit Wasser besprüht und nach und nach die Verbraucher angeschaltet wurden, welche die Belastung des Riementriebes erhöhen (1. ohne Verbraucher, 2. nur Licht + Scheibenheizung + Sitzheizung + Lüfter auf volle Stufe, 3. Klimaanlage + vorherige Verbraucher, 4. bisherige Verbraucher + lenken von Anschlag zu Anschlag). Dabei wurden die Geräusche aufgenommen und subjektiv nach den Kategorien "-", "∘", "+" bewertet.

Die Trockengeräusche (= Schiefstellungsgeräusche) wurden auf einem Prüfstand, bei dem ein Scheibenversatz einstellbar ist, bei einer Antriebsdrehzahl von 1000 min⁻¹, einer Drehungleichförmigkeit von 17,5° und einer Vorspannung von 330 N/Trum ermittelt. Bei dieser Anordnung ergibt sich die Schiefstellung eines Riementrums. Die Schiefstellung wurde von 0 bis 2,6° variiert. Machte ein Riemen bis 2° keine Geräusche, wurde er mit "+" bewertet. Schaffte er nur 1,5° ohne Geräusche, war die Bewertung "∘". Zeigte er bei weniger Schiefstellung Geräusche, war die Bewertung "-".

Die Abriebbeständigkeit wurde ermittelt, indem der Massenverlust von Riemen bestimmt wurde, den die Riemen auf einem Dieselmotor nach 72h im Leerlauf mit hoher Generatorstromabnahme (50A) erfuhren, wobei die Umgebung des Riemens auf 110°C temperiert wurde.

Die nachfolgende Tabelle fasst die für das erfindungsgemäße Beispiel 1 sowie die Vergleichsbeispiele 1 bis 4 gefundenen Ergebnisse zusammen:

**Abkürzungen: PA6 = Polyamid 6; PA66=Nylon; BW = Baumwolle; PU = Polyurethan**

| Beispiel | Vergleichs beispiel 1 | Vergleichs beispiel 2 | Vergleichs beispiel 3 | Vergleichs beispiel 4 | Beispiel 1 |
|---|---|---|---|---|---|
| Material | PA6/PU | BW/PU | PA66/BW/ PU | BW/PA66/ PU | BW/PA66/ PU |
| Zusammensetzung [m%] | 82/18 | 91/9 | 49/45/6 | 43/50/7 | 43/50/7 |
| Auflage | Kettwirkware | Gestrick | Gestrick | Gestrick | Gestrick |
| Bemerkung | | | Plattiert PA außen | Plattiert BW außen | Doppelt plattiert |
| Flächengewicht (g/m²) | 155 | 225 | 305 | 230 | 240 |
| Reibbeiwert trocken | 1,6 | 1,3 | 1,2 | 1,8 | 1,5 |
| Reibbeiwert nass | 0,65 | 1,1 | 0,7 | 0,9 | 0,80 |
| Geräuschbewertung trocken | o | + | + | o | + |
| Geräuschbewertung nass | - | + | o | + | + |
| Verschleißbeständigkeit | + | - | + | + | + |

Aus der vorstehenden Tabelle ergibt sich, dass für das erfindungsgemäße Beispiel eine gute Bewertung für die Geräusche nass und trocken sowie eine gute Verschleißbeständigkeit erhalten wurden.

Die Keilrippenriemen gemäß dem erfindungsgemäßen Beispiel wurden darüber hinaus positiv bezüglich Lebensdauer und Kältebeständigkeit bewertet. Die Kältebeständigkeit wurde mit einem Kältetest nach VDA, Stand 2005, bestimmt, wobei der Riemen 100x bei einer Temperatur von -40°C gestartet wurde.

## Patentansprüche

1. Artikel mit einem elastischen Grundkörper auf der Basis wenigstens eines thermoplastischen Elastomers oder auf der Basis eines Vulkanisates mit einer Artikeloberfläche, die mit einer Textilauflage versehen ist, welche eine plattierte Maschenware ist, **dadurch gekennzeichnet, dass** die Textilauflage mehrfach abwechselnd plattiert ist und aus mindestens zwei Garntypen besteht, die sich in regelmäßen Abständen in den einzelnen Maschenreihen abwechseln, so dass sich beide Garntypen in definierten Abständen mal auf der einen, mal auf der anderen Seite der Textilauflage befinden.

2. Artikel nach Anspruch 1, wobei der eine Garntyp aus Cellulosefasern besteht und der andere Garntyp aus Thermoplastfasern besteht.

3. Artikel nach Anspruch 2, wobei das Garn vom Typ Cellulosefasern aus Baumwolle oder Viskose besteht.

4. Artikel nach Anspruch 2 oder 3, wobei das Garn vom Typ Thermoplastfasern aus PA6.6, PA6 oder PET besteht.

5. Artikel nach einem der Ansprüche 2 bis 4, wobei jede zweite, dritte, vierte oder fünfte Maschenreihe aus Garn vom Typ Cellulosefasern besteht und sich auf der Seite von der Textilauflage befindet, die mit dem elastischen Grundkörper in Kontakt steht.

6. Artikel nach einem der Ansprüche 2 bis 4, wobei jede zweite, dritte, vierte oder fünfte Maschenreihe aus Garn vom Typ Thermoplastfasern besteht und sich auf der Seite von der Textilauflage befindet, die mit dem elastischen Grundkörper in Kontakt steht.

7. Artikel nach einem der Ansprüche 1 bis 6, wobei die beiden Garntypen eine unterschiedliche Dicke aufweisen.

8. Artikel nach einem der Ansprüche 1 bis 7, wobei die Textilauflage mindestens einen dritten Faden zur Stabilisierung der Textilauflage umfasst.

9. Artikel nach Anspruch 8, wobei der dritte Faden ein Polyurethanfaden ist.

10. Artikel nach einem der Ansprüche 1 bis 9 in der Form eines Bandes, Gurtes, Riemens, Schlauches, Luftfederbalges, Kompensators oder einer mehrschichtigen Stoffbahn.

11. Artikel nach Anspruch 10 in der Form eines Antriebsriemens, wobei der elastische Grundkörper eine Decklage als Riemenrücken und einen Unterbau mit einer Kraftübertragungszone umfasst, wobei die Decklage und/oder die Kraftübertragungszone mit der Textilauflage versehen ist/sind.

12. Artikel nach Anspruch 11, wobei der Antriebsriemen als Flachriemen, Keilriemen, Keilrippenriemen, Zahnriemen, Kupplungsriemen oder Aufzugsriemen ausgebildet ist.

13. Artikel nach einem der Ansprüche 1 bis 12, wobei die plattierte Maschenware ein Gestrick oder eine Kettwirkware ist.

14. Artikel nach Anspruch 13, wobei das Gestrick ein Rechts-Links-Gestrick ist.

## Claims

1. Article having an elastic main body based on at least one thermoplastic elastomer or based on a vulcanizate having an article surface provided with a textile overlay which is a plated knitted fabric, **characterized in that** the textile overlay has multiply alternating plating and consists of at least two yarn types that alternate at regular intervals in the individual knitted courses, such that the two yarn types are present at defined distances, sometimes on one and sometimes on the other side of the textile overlay.

2. Article according to Claim 1, wherein one yarn type consists of cellulose fibres and the other yarn type consists of thermoplastic fibres.

3. Article according to Claim 2, wherein the yarn of the cellulose fibre type consists of cotton or viscose.

4. Article according to Claim 2 or 3, wherein the yarn of the thermoplastic fibre type consists of PA6.6, PA6 or PET.

5. Article according to any of Claims 2 to 4, wherein every second, third, fourth or fifth knitted course consists of yarn of the cellulose fibre type and is present on the side of the textile overlay which is in contact with the elastic main body.

6. Article according to any of Claims 2 to 4, wherein every second, third, fourth or fifth knitted course consists of yarn of the thermoplastic fibre type and is present on the side of the textile overlay which is in contact with the elastic main body.

7. Article according to any of Claims 1 to 6, wherein the two yarn types are of different thickness.

8. Article according to any of Claims 1 to 7, wherein the textile overlay comprises at least a third filament for stabilization of the textile overlay.

9. Article according to Claim 8, wherein the third filament is a polyurethane filament.

10. Article according to any of Claims 1 to 9, in the form of a band, belt, strap, hose, set of air bellows, compensator or a multilayer material web.

11. Article according to Claim 10 in the form of a drive belt, wherein the elastic main body comprises an outer layer as belt backing and a substructure having a force transmission zone, wherein the outer layer and/or the force transmission zone has/have been provided with the textile overlay.

12. Article according to Claim 11, wherein the drive belt takes the form of a flat belt, V-belt, V-ribbed belt, toothed belt, clutch belt or elevator belt.

13. Article according to any of Claims 1 to 12, wherein the plated knitted fabric is a loop-drawn knit or a warp knit.

14. Article according to Claim 13, wherein the loop-drawn knit is a right-left knit.

## Revendications

1. Article avec un corps de base élastique à base d'au moins un élastomère thermoplastique ou à base d'un vulcanisat, avec une surface d'article, qui est pourvue d'un revêtement textile qui est une étoffe à mailles plaquée, **caractérisé en ce que** le revêtement textile est plaqué plusieurs fois en alternance et est constitué d'au moins deux types de fils qui alternent à intervalles réguliers dans les rangées de mailles individuelles, de telle sorte que les deux types de fils se trouvent à intervalles définis tantôt d'un côté tantôt de l'autre du revêtement textile.

2. Article selon la revendication 1, dans lequel l'un des types de fils est constitué de fibres de cellulose et l'autre type de fil est constitué de fibres thermoplastiques.

3. Article selon la revendication 2, dans lequel le fil de type fibres de cellulose est constitué de coton ou de viscose.

4. Article selon la revendication 2 ou 3, dans lequel le fil de type fibres thermoplastiques est constitué de PA6.6, PA6 ou PET.

5. Article selon l'une quelconque des revendications 2 à 4, dans lequel chaque deuxième, troisième, quatrième ou cinquième rangée de mailles est constituée de fil de type fibres de cellulose et se trouve sur le côté du revêtement textile qui est en contact avec le corps de base élastique.

6. Article selon l'une quelconque des revendications 2 à 4, dans lequel chaque deuxième, troisième, quatrième ou cinquième rangée de mailles est constituée de fil de type fibres thermoplastiques et se trouve sur le côté du revêtement textile qui est en contact avec le corps de base élastique.

7. Article selon l'une quelconque des revendications 1 à 6, dans lequel les deux types de fil présentent une épaisseur différente.

8. Article selon l'une quelconque des revendications 1 à 7, dans lequel le revêtement textile comprend au moins un troisième fil pour stabiliser le revêtement textile.

9. Article selon la revendication 8, dans lequel le troisième fil est un fil de polyuréthane.

10. Article selon l'une quelconque des revendications 1 à 9, sous la forme d'un ruban, d'une sangle, d'une courroie, d'un tuyau, d'un soufflet de suspension pneumatique, d'un compensateur ou d'une bande de matériau multicouche.

11. Article selon la revendication 10 sous la forme d'une courroie de transmission, dans lequel le corps de base élastique comprend une couche de recouvrement en tant que dos de courroie et une embase avec une zone de transmission de force, dans lequel la couche de recouvrement et/ou la zone de transmission de force est/sont pourvue(s) du revêtement textile.

12. Article selon la revendication 11, dans lequel la courroie d'entraînement est configurée sous forme de courroie plate, de courroie trapézoïdale, de courroie trapézoïdale à nervures, de courroie dentée, de courroie d'embrayage ou de courroie d'ascenseur.

13. Article selon l'une quelconque des revendications 1 à 12, dans lequel l'étoffe à mailles plaquée est un tricot ou un tricot chaîne.

14. Article selon la revendication 13, dans lequel le tricot est un tricot à une seule face.
